(19) **Europäisches Patentamt / European Patent Office / Office européen des brevets**

(11) **EP 3 077 248 B1**

(12) # FASCICULE DE BREVET EUROPEEN

(45) Date de publication et mention de la délivrance du brevet:
**10.01.2018 Bulletin 2018/02**

(21) Numéro de dépôt: **14809474.1**

(22) Date de dépôt: **06.11.2014**

(51) Int Cl.:
**B60L 11/18** *(2006.01)*        **H02M 3/335** *(2006.01)*

(86) Numéro de dépôt international:
**PCT/FR2014/052832**

(87) Numéro de publication internationale:
**WO 2015/082787 (11.06.2015 Gazette 2015/23)**

(54) **PROCÉDÉ ET SYSTEM DE COMMANDE D'UN CHARGEUR BIDIRECTIONNEL D'UNE BATTERIE DE VÉHICULE AUTOMOBILE**

VERFAHREN UND SYSTEM ZUR STEUERUNG EINER BIDIREKTIONALEN LADEVORRICHTUNG EINER KRAFTFAHRZEUGBATTERIE

METHOD AND SYSTEM FOR CONTROLLING A BIDIRECTIONAL CHARGER OF A MOTOR VEHICLE BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.12.2013 FR 1361985**

(43) Date de publication de la demande:
**12.10.2016 Bulletin 2016/41**

(73) Titulaire: **Renault S.A.S.**
**92100 Boulogne-Billancourt (FR)**

(72) Inventeurs:
• CREGUT, Samuel
  F-78470 Saint Remy Les Chevreuse (FR)
• DOFFIN, Hugues
  F-78530 Buc (FR)

(56) Documents cités:
**US-A1- 2013 314 950    US-B1- 6 452 815**

• KRISMER F ET AL: "A comparative evaluation of isolated bi-directional DC/DC converters with wide input and output voltage range", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., vol. 1, 2 octobre 2005 (2005-10-02), pages 599-606, XP010842429, DOI: 10.1109/IAS.2005.1518368 ISBN: 978-0-7803-9208-3

• MANU JAIN ET AL: "A Bidirectional DC-DC Converter Topology for Low Power Application", IEEE TRANSACTIONS ON POWER ELECTRONICS, INSTITUTE OF ELECTRICAL AND ELECTRONICS ENGINEERS, USA, vol. 15, no. 4, 1 juillet 2000 (2000-07-01), XP011043450, ISSN: 0885-8993

**Description**

L'invention a pour domaine technique la commande de la charge de batteries de véhicule automobile.

Dans le cadre de développement de véhicules électriques à bas coût, le système de charge présente, au même titre que le groupe motopropulseur électrique (GMPe) ou la batterie haute tension (HT), un poste de coût important qu'il convient de réduire.

La limitation de la puissance de recharge représente un premier moyen de réduire le coût du système de charge. Il convient ainsi d'associer au véhicule électrique un système de recharge dit « lente », c'est-à-dire qui prend son énergie sur le réseau monophasé avec une puissance inférieure ou égale à 7kW. Un tel chargeur absorbe typiquement 10A, 16A ou 32A sur le réseau monophasé et est compatible avec une prise domestique.

Par ailleurs, les chargeurs de véhicules électriques sont actuellement non réversibles, c'est à dire que le flux d'énergie circule uniquement du réseau électrique vers la batterie. Dans le futur, il va être intéressant de disposer de chargeurs bidirectionnels, c'est-à-dire également capables de faire circuler de l'énergie de la batterie vers le réseau électrique.

La demande de brevet US2013/314950 divulgue un tel chargeur bidirectionnel.

De tels chargeurs permettent, par exemple, de lisser la courbe de charge du réseau électrique en utilisant le stockage d'énergie que représente la batterie du véhicule branché. La batterie est ainsi chargée lors des creux de consommation durant lesquels l'infrastructure et les moyens de production sont sous-utilisés, et fournit de l'énergie lors des pics afin d'éviter l'utilisation de moyens de production peu utilisés et coûteux ainsi que de surcharger le réseau d'alimentation électrique. Dans ce cas, le déploiement massif du véhicule électrique n'implique pas d'investissements supplémentaires de production ou d'infrastructure, mais en revanche permet de lisser des pointes de consommations coûteuses à fournir (avec une énergie généralement très carbonée). Les chargeurs bidirectionnels permettent de faciliter le déploiement des énergies renouvelables en adaptant au mieux la consommation de l'énergie produite aux aléas de production propres aux énergie vertes et bénéficier d'une meilleure performance en termes d'émissions de dioxyde de carbone ($CO_2$) du véhicule électrique tout en facilitant l'introduction de la production d'énergies renouvelables.

Les chargeurs bidirectionnels permettent également de créer de nouvelles activités liées au contrôle et à l'optimisation de la consommation énergétique sans dégradation de service.

Aujourd'hui, il est demandé à la fonction recharge de réaliser la conversion d'énergie entre le réseau et la batterie. Cette conversion nécessite que le chargeur s'adapte à de larges plages de tension d'entrée (90V à 250V AC) et de tension batterie (250V à 400V DC).

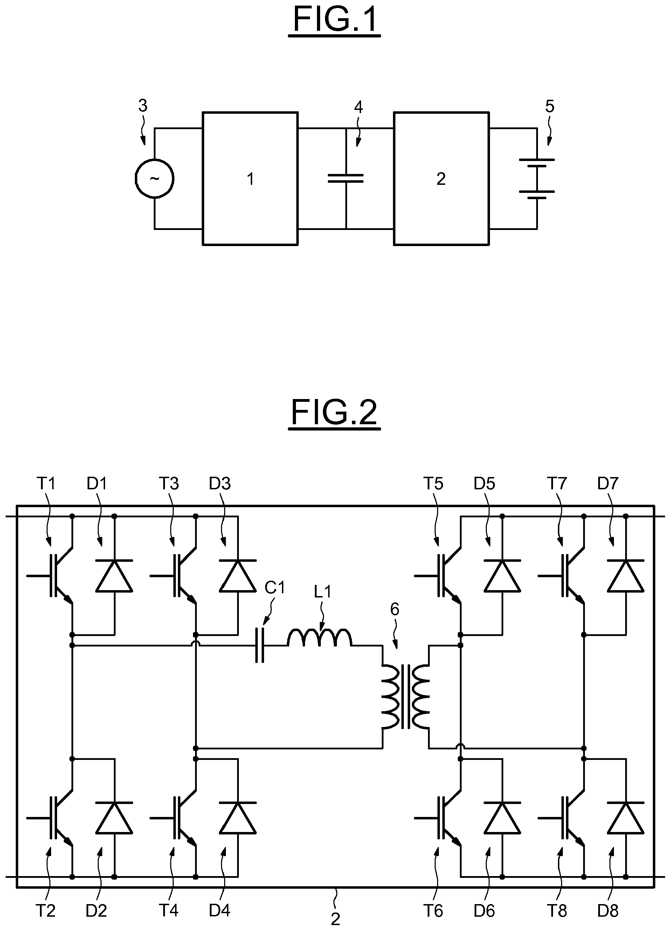

La figure 1 illustre les principaux éléments d'un chargeur qui comprennent un étage redresseur d'entrée connecté au réseau 3 et assurant la fonction de correction de facteur de puissance, notée PFC (acronyme anglais pour « Power Factor Corrector ») et un étage de conversion continu-continu, noté DC/DC, permettant l'isolation galvanique de la batterie 5. Un filtre d'interférences électromagnétiques noté EMI (acronyme anglais pour « Electromagnetic interférences ») peut être disposé entre le réseau 3 et l'étage redresseur d'entrée, tandis qu'un filtre de sortie peut être disposé entre l'étage de conversion continu-continu et la batterie 5.

La difficulté réside dans le fait de pouvoir s'adapter à l'ensemble des niveaux de tension mentionnés ci-dessus sans sacrifier ni le rendement ni le coût de l'étage de conversion tout en gardant la possibilité de réaliser une charge bidirectionnelle.

En ce qui concerne la charge bidirectionnelle des véhicules électriques, l'état de la technique repose aujourd'hui essentiellement sur des topologies non isolées, c'est-à-dire qu'il n'existe pas d'isolation galvanique entre le réseau et la batterie.

En ce qui concerne la conception des chargeurs isolés, de manière générale, le premier étage est constitué d'une topologie boost permettant de réaliser la fonction PFC tout en étant élévateur de tension. Afin de limiter les pertes à la commutation liées à l'augmentation de fréquence (synonyme de réduction de volume, poids), il est fortement recommandé que le second étage utilise un circuit résonnant.

Entre ces deux étages, une capacité électrolytique est positionnée afin de lisser le courant en courant constant et permettre de gérer un flux de puissance constant et non plus variable en $\sin^2$.

Le premier étage ayant une fonction élévateur de tension, la tension DC (bus DC) entre les deux étages se retrouve bien généralement supérieure à la tension batterie. Cela implique que l'étage DC/DC doit présenter un gain en tension inférieur à l'unité.

Avec un circuit isolé résonnant, le gain total en tension est obtenu par le produit entre le facteur de transformation du transformateur et le gain du circuit résonnant. Le facteur de transformation est fixe et dépendant de la conception. Il ne peut pas aider à adapter le gain lors d'une charge de véhicule. Toutefois, lorsque l'on recharge un véhicule, la tension batterie varie en fonction de son état de charge noté SoC (acronyme anglais pour « State of Charge »), cela nécessite en temps réel que l'étage DC/DC adapte son gain pour permettre de convertir la tension du bus DC vers la tension batterie.

Cette adaptation de tension ne peut être faite que par le fonctionnement du circuit résonnant.

Généralement, l'utilisation de la topologie résonnante série-parallèle LLC (acronyme faisant référence à l'emploi d'un circuit comprenant l'association de deux inductances notées chacune L et d'une capacité notée C) est appliquée dans le convertisseur DC/DC. La variation de la fréquence de commutation en cours de charge permet de faire varier le gain en tension du circuit résonnant. La fréquence utilisée est toujours supérieure à la fréquence propre $f_0$ du circuit résonnant, qui fonctionne alors dans un régime d'hyper-résonance. L'utilisation d'un circuit résonnant en hyper-fréquence permet d'avoir des commutations douces à tension nulle ZVS (acronyme anglais pour « Zero Voltage Switching ») lors de la fermeture des transistors.

Cependant, cette solution comporte deux problèmes importants.

Un premier problème réside dans le fait que la dynamique de contrôle de la conversion DC/DC résonnant en hyper-fréquence dépend du flux de puissance le traversant. Pour régler ce problème, une capacité électrolytique (volumineuse, chère et peu fiable) doit être mise en place entre le PFC et le DC/DC afin de lisser le flux de puissance. Une telle capacité est notée 4 sur la figure 1.

Un deuxième problème réside dans le fait que le fonctionnement en hyper-fréquence permet de limiter les pertes lors de la fermeture des transistors mais pas lors de leur ouverture. Si la fréquence de commutation des interrupteurs est égale à la fréquence propre $f_0$ il est possible de combiner la fermeture en ZVS avec une limitation des pertes à l'ouverture en commutation à courant nul ZCS (acronyme anglais pour « Zero Current Switching »).

De l'état de la technique, on connait les documents suivants.

Le document US20110273130 présente un chargeur isolé bidirectionnel. D'une part, ce chargeur n'est pas utilisé pour des applications véhicules mais comme tous les chargeurs de ce type, il comprend un étage de rectification du courant effectué avec une capacité électrolytique.

La demande de brevet FR1255070 divulgue une topologie résonnante permettant de réaliser de charger une batterie sans utiliser de correction de facteur de puissance. Cependant, le contrôle d'une telle topologie se fait à fréquence variable, induisant un fonctionnement en ZVS. Un tel fonctionnement génère des pertes par commutation non négligeables limitant la fréquence de fonctionnement. Cette limitation implique indirectement des couts supplémentaires.

Il demeure un problème technique au niveau de la commande d'un chargeur bidirectionnel permettant de s'adapter à l'ensemble de ces niveaux de tension sans sacrifier ni le rendement ni le coût du convertisseur. Une telle commande doit également maintenir la possibilité de réaliser une charge bidirectionnelle.

Un objet de l'invention est un procédé de commande d'un chargeur bidirectionnel d'une batterie de véhicule automobile. Le chargeur comprend un étage redresseur connecté en entrée à un réseau d'alimentation électrique et en sortie à un étage de conversion continu-continu et à une capacité, l'étage de conversion continu-continu étant connecté à la batterie. L'étage de conversion continu-continu comprend un premier ensemble de transistors connecté en entrée à l'étage redresseur et en sortie en série à un circuit résonnant et à un transformateur, le transformateur étant relié à un deuxième ensemble de transistors, le deuxième ensemble étant relié par ailleurs à la batterie. Le procédé comprend les étapes suivantes :

on commande l'étage redresseur de sorte que la tension redressée soit égale à la somme de la valeur de crête de la tension du réseau d'alimentation électrique et d'une valeur de décalage constante,
on commande le premier ensemble de transistors de l'étage de conversion continu-continu à la fréquence de résonance du circuit résonnant,
on détermine si le rapport de couplage entre la tension de batterie et la tension redressée est supérieur à une valeur mémorisée du rapport de couplage entre la valeur maximale de la tension de batterie et la valeur minimale de la tension redressée,
si tel est le cas, on commande le deuxième ensemble de transistors de l'étage de conversion continu-continu de sorte qu'il soit dans un état passant,
si tel n'est pas le cas, on commande la commutation de tout ou partie du deuxième ensemble de transistors de l'étage de conversion continu-continu de sorte qu'un court-circuit de l'enroulement secondaire du transformateur soit réalisé périodiquement, la période de commande du deuxième ensemble de transistors dépendant du rapport de couplage entre la tension de batterie et la tension redressée.

Pour commander la commutation de tout ou partie du deuxième ensemble de transistors de l'étage de conversion continu-continu, on peut réaliser les étapes suivantes :

on détermine au moins un signal d'activation du court-circuit en fonction d'une mesure de la tension redressée,
on régule la tension redressée en fonction d'une mesure de la tension redressée et d'un signal d'activation en déterminant une durée de court-circuit de l'enroulement secondaire du transformateur, et
on détermine au moins un signal de commande de deux transistors du deuxième ensemble en fonction de la durée de court-circuit et d'au moins un signal d'activation.

On peut émettre un signal d'activation du court-circuit de l'enroulement secondaire du transformateur qui prend une première valeur lorsque la tension redressée est supérieure à une tension de seuil de court-circuit, et une deuxième valeur sinon.

On peut déterminer une durée de court-circuit de l'enroulement secondaire du transformateur en fonction de l'écart entre la mesure de tension redressée et la valeur d'une consigne correspondante par une correction de type proportionnel, intégral, dérivée.

En effet, lorsque cette différence est positive non nulle, il faut augmenter la valeur de la durée du court-circuit, ce qui va augmenter la tension au niveau de l'enroulement secondaire; on a donc un système stable à gain positif.

On peut émettre au moins un signal de modulation lorsque le signal d'activation prend une première valeur, aucun signal n'étant émis si le signal d'activation prend une deuxième valeur, les signaux de modulation étant aptes à commuter tout ou partie des transistors du deuxième ensemble de sorte que l'enroulement secondaire du transformateur soit court-circuité pendant une durée égale à la durée de court-circuit.

On peut émettre un premier signal de modulation à destination de la paire formée par un cinquième transistor et un septième transistor et/ou un deuxième signal de modulation à destination de la paire formée par un sixième transistor et un huitième transistor.

Un autre objet de l'invention est un système de commande d'un chargeur bidirectionnel d'une batterie de véhicule automobile. Le chargeur comprend un étage redresseur connecté en entrée à un réseau d'alimentation électrique et en sortie à un étage de conversion continu-continu et à une capacité, l'étage de conversion continu-continu étant connecté à la batterie. L'étage de conversion continu-continu comprend un premier ensemble de transistors connecté en entrée à l'étage redresseur et en sortie en série à un circuit résonnant et à un transformateur, le transformateur étant relié à un deuxième ensemble de transistors, le deuxième ensemble étant relié par ailleurs à la batterie. Le système comprend :

un moyen de commande de l'étage redresseur apte à commander l'étage redresseur de sorte que la tension redressée soit égale à la somme de la valeur de crête de la tension du réseau d'alimentation électrique et d'une valeur de décalage constante,
un moyen de commande des transistors apte à commander la commutation du premier ensemble de transistors de l'étage de conversion continu-continu à la fréquence de résonance du circuit résonnant,
un moyen de détermination apte à déterminer si le rapport de couplage entre la tension de batterie et la tension redressée est supérieur à une valeur mémorisée du rapport de couplage entre la valeur maximale de la tension de batterie et la valeur minimale de la tension redressée,
si tel est le cas, le moyen de commande des transistors est apte à commander le deuxième ensemble de transistors de l'étage de conversion continu-continu de sorte qu'il soit dans un état passant,
si tel n'est pas le cas, le moyen de commande des transistors est apte à commander la commutation de tout ou partie du deuxième ensemble de transistors de l'étage de conversion continu-continu de sorte qu'un court-circuit de l'enroulement secondaire du transformateur soit réalisé périodiquement, la période de commande du deuxième ensemble de transistors dépendant du rapport de couplage entre la tension de batterie et la tension redressée.

Le moyen de commande des transistors peut comprendre un moyen de commande d'activation recevant en entrée une mesure de la tension redressée, un moyen de régulation de la tension redressée recevant en entrée une mesure de la tension redressée et un signal d'activation du moyen de commande d'activation, un moyen de détermination du signal de modulation, recevant en entrée une durée de court-circuit du moyen de régulation de la tension redressée et le signal d'activation du moyen de commande d'activation, le moyen de détermination du signal de modulation étant apte à émettre en sortie au moins un signal de commande de deux transistors du deuxième ensemble.

Le moyen de commande d'activation peut émettre un signal d'activation du court-circuit de l'enroulement secondaire du transformateur qui prend une première valeur lorsque la tension redressée est supérieure à une tension de seuil de court-circuit, et une deuxième valeur sinon.

Le moyen de régulation de la tension redressée peut comprendre une correction de type proportionnel, intégral, dérivée apte à déterminer une durée de court-circuit de l'enroulement secondaire du transformateur en fonction de l'écart entre la mesure de tension redressée et la valeur d'une consigne correspondante.

Le réglage de ce correcteur est relativement facile dans la mesure où la bande passante du système est très élevée. En effet, une faible augmentation de la durée de court-circuit réalise rapidement une augmentation de tension au niveau de l'enroulement secondaire. Au moins un signal de modulation peut être émis par le moyen de détermination du signal de modulation lorsque le signal d'activation prend une première valeur, aucun signal n'étant émis si le signal d'activation prend une deuxième valeur, les signaux de modulation étant aptes à commuter tout ou partie des transistors du deuxième ensemble de sorte que l'enroulement secondaire du transformateur soit court-circuité pendant une durée égale à la durée de court-circuit déterminée par le moyen de régulation de la tension redressée.

Le moyen de détermination du signal de modulation peut être apte à émettre un premier signal de modulation à destination de la paire formée par le cinquième transistor et le septième transistor et/ou un deuxième signal de modulation à destination de la paire formée par le sixième transistor et le huitième transistor.

L'invention présente comme principal avantage une réduction importante du coût puisqu'on tire parti au maximum de la présence de transistors connectés à l'enroulement secondaire du transistor utilisés comme interrupteurs pilotables afin de court-circuiter l'enroulement secondaire. De plus, la structure de l'étage de conversion continu-continu est symétrique du fait de la présence du premier ensemble et du deuxième ensemble de transistors. Ainsi, lorsque l'on est en charge, les transistors du deuxième ensemble sont employés pour court-circuiter l'enroulement secondaire, tandis que les transistors du premier ensemble sont employés pour cette même tache, lorsque le chargeur bidirectionnel fonctionne en émission de puissance de la batterie vers le réseau d'alimentation électrique. Dans les deux cas, l'autre ensemble de transistors est employé pour les fonctions d'adaptation de tension attendues d'un étage de conversion continu-continu.

Un autre avantage est de pouvoir supprimer la capacité électrolytique située entre l'étage redresseur et l'étage de conversion continu-continu en ne conservant qu'une petite capacité de type film présentant une valeur typique 30 à 40 $\mu$F, des pertes bien plus faibles et un cout de revient inférieur.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments d'un chargeur bidirectionnel,
- la figure 2 illustre les principaux éléments de l'étage d'entrée et de l'étage de conversion continu-continu,
- la figure 3 illustre les valeurs maximales et minimales du rapport de couplage en fonction de la tension de batterie,
- la figure 4 illustre un schéma électrique équivalent du transformateur, et
- la figure 5 illustre les principaux éléments d'un système de commande du chargeur bidirectionnel.

La figure 1 montre le chargeur bidirectionnel comprenant un étage redresseur 1 d'entrée et un étage de conversion continu-continu 2 de sortie.

L'étage redresseur 1 d'entrée génère une tension de bus continu et assure une absorption d'un courant sinusoïdal sur le réseau d'alimentation électrique 3. L'étage redresseur 1 d'entrée est connecté en parallèle à une capacité 4 et à un étage de conversion continu continu 2 de sortie, l'étage de conversion étant relié en sortie à une batterie 5.

A la différence de l'état de la technique antérieur, l'étage redresseur 1 d'entrée du chargeur bidirectionnel selon l'invention est également apte à réguler la charge de la batterie à travers la variation de la tension du bus continu (325V-400V).

Sur la figure 2, on peut voir que l'étage de conversion continu-continu 2 de sortie est à résonnance série et à isolation galvanique par l'intermédiaire d'un transformateur 6, l'ensemble fonctionnant à fréquence de découpage constante.

Une première entrée de l'étage de conversion est connectée au collecteur d'un premier transistor T1 et au collecteur d'un troisième transistor T3, une deuxième entrée de l'étage de conversion étant connectée à l'émetteur d'un deuxième transistor T2 et à l'émetteur d'un quatrième transistor T4. L'émetteur du premier transistor T1 et le collecteur du deuxième transistor T2 sont reliés à un premier point intermédiaire, l'émetteur du troisième transistor T3 et le collecteur du quatrième transistor T4 étant connectés à un deuxième point intermédiaire.

Le premier point intermédiaire est connecté en série à une première capacité C1, une première inductance L1, à une première extrémité du premier enroulement du transformateur 6, la deuxième extrémité du premier enroulement du transformateur 6 étant reliée au deuxième point intermédiaire.

Une extrémité du deuxième enroulement du transformateur 6 est reliée à l'émetteur d'un cinquième transistor T5 et au collecteur d'un sixième transistor T6, le collecteur du cinquième transistor T5 étant connecté au collecteur d'un septième transistor T7 et à une première sortie de l'étage de conversion. L'émetteur du sixième transistor T6 est connecté à l'émetteur d'un huitième transistor T8 et à une deuxième sortie de l'étage de conversion. L'autre extrémité du deuxième enroulement est connectée à l'émetteur du septième transistor T7 et au collecteur du huitième transistor T8.

Une première diode D1 est connectée par son anode à l'émetteur du premier transistor T1 et par sa cathode au collecteur du premier transistor T1.

Une deuxième diode D2 est connectée par son anode à l'émetteur du deuxième transistor T2 et par sa cathode au collecteur du deuxième transistor T2.

Une troisième diode D3 est connectée par son anode à l'émetteur du troisième transistor T3 et par sa cathode au collecteur du troisième transistor T3.

Une quatrième diode D4 est connectée par son anode à l'émetteur du quatrième transistor T4 et par sa cathode au collecteur du quatrième transistor T4.

Une cinquième diode D5 est connectée par son anode à l'émetteur du cinquième transistor T5 et par sa cathode au collecteur du cinquième transistor T5.

Une sixième diode D6 est connectée par son anode à l'émetteur du sixième transistor T6 et par sa cathode au collecteur du sixième transistor T6.

Une septième diode D7 est connectée par son anode à l'émetteur du septième transistor T7 et par sa cathode au collecteur du septième transistor T7.

Une huitième diode D8 est connectée par son anode à l'émetteur du huitième transistor T8 et par sa cathode au collecteur du huitième transistor T8.

Les grilles des transistors reçoivent des signaux de commande, notamment à modulation en largeur d'impulsion émis à fréquence constante.

Le deuxième ensemble de transistors (T5,T6,T7,T8) permet un fonctionnement bidirectionnel. Lors de la décharge de la batterie vers le réseau d'alimentation électrique, le comportement du premier ensemble de transistors (T1,T2,T3,T4) et deuxième ensemble de transistors (T5,T6,T7,T8) sont échangés par rapport au fonctionnement lors de la charge de la batterie.

Alternativement, l'impédance L1 de la figure 2 peut être supprimée. On utilise alors l'impédance de fuite Lf du transformateur comme inductance résonante, l'impédance de fuite étant issue du couplage imparfait du transformateur 6. Dans un tel cas, la valeur de l'impédance Lf est substituée à l'impédance L1 pour les calculs décrits ci-dessous. De même la capacité C1 peut être située du côté primaire ou du côté secondaire ou bien à la fois du côté primaire et du côté secondaire ce qui rend le montage symétrique et cela permet de bénéficier de performances semblables pour chaque sens de fonctionnement du convertisseur bidirectionnel.

Le procédé de commande du chargeur bidirectionnel décrit ci-dessus doit tenir compte des différentes contraintes suivantes.

L'étage de conversion continu-continu 2, pour présenter des pertes optimisées, doit idéalement fonctionner à la résonance, le système fonctionnant alors en recopie de tension. Un tel fonctionnement implique que la tension redressée, notée Vred, en sortie de l'étage redresseur 1 est égale à la tension de batterie Vbat.

Par ailleurs, le procédé de commande doit pouvoir s'adapter à des variations de la tension Vres du réseau. Par exemple, en France, on souhaite travailler dans une plage de tensions du réseau Vres centrée sur 230V rms (acronyme anglais pour « Root Mean Sqaure » synonyme de tension efficace) et s'étendant à ± 10% de cette valeur. En sortie, le chargeur doit être capable de s'adapter à une tension batterie Vbat variant entre 290V et 400V. Pour minimiser les pertes au niveau de l'étage redresseur 1, il convient d'avoir toujours une consigne de tension redressée Vred, notée Vred_cons, supérieure à la tension réseau crête notée Vres_cr. Pour cela, on définit une tension de décalage (« Offset Voltage » en langue anglaise), notée Ofst_Vred, et quantifiant l'écart de tension entre la consigne de tension redressée Vred_cons et la tension de réseau en crête Vres_cr. L'équation suivante traduit la relation entre ces trois valeurs.

$$\text{Vred\_cons} = \text{Vres\_cr} + \text{Ofst\_Vred} \qquad (Eq.\ 1)$$
$$\text{Avec Ofst\_Vred} = 40\ V\ \text{typiquement.}$$

L'étage de conversion continu continu 2 doit donc réaliser une relation de la forme :

$$\text{Vbat} = k*\text{Vred} \qquad (Eq.\ 2)$$

En combinant les équations 1 et 2, on obtient :

$$\text{Vbat} = k*(\text{Vres\_cr}+\text{Ofst}) \qquad (Eq.\ 3)$$

En reformulant l'équation (Eq. 3), on obtient une équation linéaire définissant la valeur de k en fonction de la tension de batterie Vbat et de la valeur de tension du réseau Vres, l'offset étant considéré fixe à 40V.

$$k = \text{Vbat} / (\text{Vres\_cr}+\text{Ofst}) \qquad (Eq.\ 4)$$

Il apparaît ainsi que, pour une valeur donnée de la tension de batterie Vbat, on peut déterminer une valeur minimale k1 du rapport de couplage correspondant à la valeur minimale de la tension de sortie du PFC. On peut également déterminer une valeur maximale k2 correspondant à la valeur maximale de la tension du réseau.

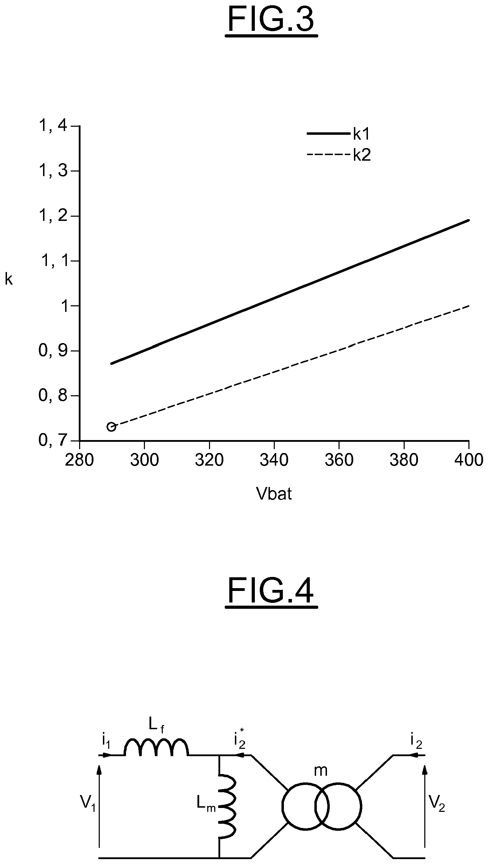

En faisant varier la tension de batterie dans la gamme de valeurs 290V-400V décrite ci-dessus, on obtient le diagramme de la figure 3 illustrant les valeurs maximales et minimales du rapport de couplage en fonction de la tension de batterie Vbat, pour les valeurs définies ci-dessus.

Pour réaliser cette adaptation de tension, on fait varier le rapport de couplage k au delà d'un premier rapport k_min en réalisant une fonction boost au niveau de l'étage de conversion continu-continu 2.

Afin d'adapter le rapport de couplage à la tension de batterie Vbat et à la tension du réseau Vres, le chargeur bidirectionnel est apte à réaliser un premier rapport de couplage obtenu de par la seule structure du transformateur 6. Le premier rapport de couplage est ainsi égal au rapport de transformation entre le nombre d'enroulements Ns de l'enroulement secondaire du transformateur et le nombre d'enroulements Np de l'enroulement primaire du transformateur. Le premier rapport de couplage, noté k_min, correspond au pire cas d'adaptation de tension à réaliser, c'est-à-dire, le cas d'une tension de réseau maximale Vres_max et d'une tension de batterie minimale Vbat_min. En considérant les valeurs présentées ci-dessus, on obtient la valeur k_min = 0,7290 en considérant une tension de réseau égale à 250V*√2.

Le chargeur bidirectionnel est également apte à réaliser un deuxième rapport de couplage noté k_max correspondant à une tension de réseau minimale Vres_min et une tension de batterie maximale Vbat_max. En considérant les valeurs présentées ci-dessus, on obtient la valeur k_max = 1,20285.

Toutefois, la structure du transformateur, via le nombre d'enroulements de l'enroulement primaire Np et de l'enroulement secondaire Ns, est fixée par le premier rapport de transformation à réaliser. Le rapport de transformation k_transfo du transformateur est ainsi fixe et égal à k_min.

$$k\_transfo = k\_min = Ns/Np \qquad (Eq.\ 5)$$

Pour atteindre la valeur k_max, il est nécessaire de réaliser une élévation de tension au niveau de l'étage de conversion continu-continu 2. Cette élévation de tension correspond à un facteur de correction du rapport de transformation k_transfo égal au rapport k_max/k_min. En considérant les valeurs présentées ci-dessus, on obtient la valeur k_max/k_min = 1,65.

Vu de la batterie, le rapport de couplage de l'étage de conversion continu-continu 2 lorsque l'élévation de tension est active correspond au produit du rapport de transformation k_transfo du transformateur 6 par le facteur de correction k_max/k_min soit k_min*(k_max/k_min). Le rapport de couplage de l'étage de conversion continu-continu 2 lorsque l'élévation de tension est active est donc bien égal k_max.

Afin de réaliser le premier rapport de couplage k_min et le deuxième rapport de couplage k_max, décrits ci-dessus, la structure du chargeur bidirectionnel illustrée par la figure 2 doit comprendre des interrupteurs pilotables connectés à l'enroulement secondaire du transformateur, aptes à réaliser un court-circuit rapide de l'enroulement secondaire du transformateur.

Un court-circuit de l'enroulement secondaire du transformateur permet de réaliser une fonction d'élévation de la tension, également appelée fonction boost. Le principe utilisé peut être plus facilement compris en considérant la figure 4 qui montre un schéma électrique équivalent du transformateur.

Durant le court-circuit de l'enroulement secondaire du transformateur, la tension V2 imposée est nulle. La tension aux bornes de l'impédance $L_m$ (inductance magnétisante) est donc également nulle. On rappelle que la dérivée temporelle du courant circulant dans une inductance varie proportionnellement à la variation de tension aux bornes de cette inductance Dans le cas présent, la variation de tension aux bornes de l'inductance $L_m$ étant nulle, la tension et le courant sont constants.

Toute la tension appliquée à l'enroulement primaire est appliquée aux bornes de l'inductance $L_f$. L'accroissement de courant circulant dans l'inductance $L_f$ est déterminé par application de la relation suivante:

$$\Delta I_1 = \frac{\Delta T_{CC} \cdot \Delta V1}{L_f} \qquad (Eq.\ 6)$$

Avec

$\Delta V1$ : tension appliquée à l'enroulement primaire
$\Delta T_{CC}$ : durée du court-circuit

Le courant $I_1$ va donc croitre rapidement, tandis que sa variation est uniquement limitée par la valeur de l'inductance $L_f$, qui est très inférieure à celle de l'inductance $L_m$.

Après la phase de court-circuit, le courant circulant dans l'enroulement secondaire s'écoule vers la batterie.

EP 3 077 248 B1

Une fonction d'élévation de tension est ainsi réalisée. La répétition des cycles de charge et de décharge du transformateur permettent d'obtenir une tension élevée au niveau de la batterie. Le niveau de tension est commandé par la durée de commutation des interrupteurs de court-circuit via des signaux de commutation périodique. Il est ainsi possible d'obtenir un rapport de couplage k variant entre k_min et k_max.

L'étage de conversion continu-continu d'un chargeur bidirectionnel comprend deux ensembles de transistors disposés en amont et en aval du transformateur 6. Ces deux ensembles peuvent être pilotés de façon indépendante l'un de l'autre afin d'obtenir la réversibilité du chargeur. En effet, lors de la charge, le premier ensemble (T1,T2,T3,T4) est modulé afin de réaliser l'adaptation de tension, le deuxième ensemble (T5,T6,T7,T8) est piloté de façon à être transparent à la circulation du courant vers la batterie. Les rôles sont inversés lors de la décharge.

En combinant le principe d'élévation de tension par court-circuit décrit plus haut avec la structure particulière de l'étage de conversion continu-continu 2 d'un chargeur bidirectionnel, il apparait que, lors de la charge, le deuxième ensemble (T5,T6,T7,T8) de transistors peut être employé afin de réaliser le court-circuit de l'enroulement secondaire du transformateur. On économise ainsi des interrupteurs supplémentaires ainsi que toute l'électronique de contrôle correspondante.

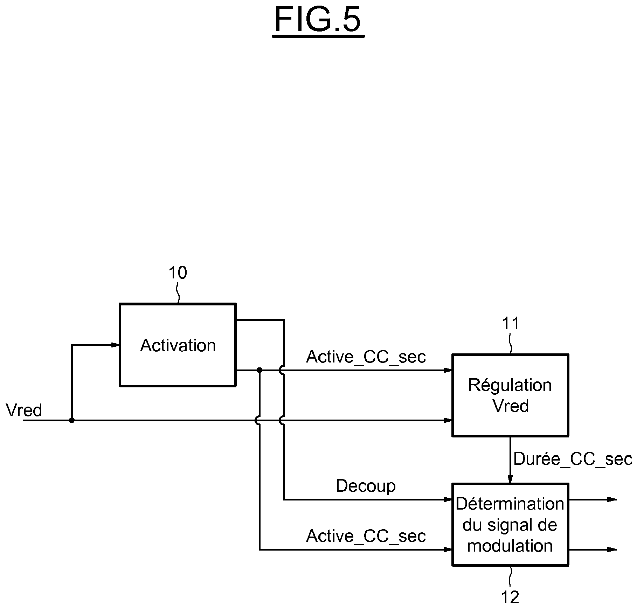

Le système de commande du chargeur bidirectionnel illustré par la figure 5, comprend un moyen de commande 10 d'activation, un moyen de régulation 11 de la tension redressée Vred et un moyen de détermination 12 du signal de modulation.

Le moyen de commande 10 d'activation reçoit en entrée la tension redressée Vred mesurée aux bornes de la capacité 4, et émet en sortie un signal « Decoup » d'activation globale du système, ainsi qu'un signal « Active_CC_sec » d'activation du court-circuit au niveau de l'enroulement secondaire du transformateur.

On détermine les signaux en fonction de la comparaison de la valeur Vred à des valeurs de seuils.

Lorsque la tension redressée Vred est supérieure au seuil Seuil_Coupure_CC (par exemple 380 V), le signal « Active_CC_sec » prend une première valeur associée à l'activation du court-circuit.

Lorsque la tension redressée Vred est inférieure au seuil Seuil_Coupure_CC, le signal « Active_CC_sec » prend une deuxième valeur associée à l'arrêt du court-circuit.

Le seuil Seuil_Coupure_CC est fixé typiquement 8V en dessous de la consigne pour la tension redressée Vred.

Alternativement, on peut considérer une valeur d'hystérésis pour éviter des oscillations.

Le signal « Decoup » d'activation globale du système prend une première valeur associée à l'activation du système lorsque la tension redressée Vred est supérieure à une tension de seuil Seuil_Coupure_Decoup.

Le signal « Decoup » d'activation globale du système prend une deuxième valeur associée à l'arrêt du système lorsque la tension redressée Vred est inférieure à une tension de seuil Seuil_Coupure_Decoup. Avec les valeurs présentées plus haut, la valeur de seuil Seuil_Coupure_Decoup est typiquement de 300 V.

Alternativement, on peut considérer une valeur d'hystérésis pour éviter des oscillations. La valeur d'hystérésis peut être égale à 10V.

Le moyen de régulation 11 de la tension redressée Vred reçoit en entrée la tension redressée Vred aux bornes de la capacité 4. Le moyen de régulation comprend une correction de type intégral, ou plus généralement, de type proportionnel, intégral, dérivée (acronyme PID) apte à déterminer une durée de court-circuit au secondaire notée « Duree_CC_sec » (en $\mu$s) en fonction de l'écart entre une mesure de tension redressée Vred aux bornes de la capacité 4 et la valeur de la consigne correspondante. La durée de court-circuit est obtenue directement en sortie du correcteur PID.

On dispose essentiellement de deux grandeurs de réglage, le gain de l'action intégrale et la valeur initiale de la durée de court-circuit.

Le gain de l'action intégrale noté Ki détermine la rapidité du correcteur à appliquer une correction à la valeur émise en fonction de l'écart entre la mesure de Vred et la consigne correspondante.

La valeur initiale de la durée de court-circuit de l'enroulement secondaire notée « Duree_CC_sec » est émise par le correcteur au moment de son activation. Cette valeur est un paramètre important de la régulation dans la mesure où une activation et une désactivation du correcteur sont réalisées chaque 10 ms (pour un réseau d'alimentation électrique avec une fréquence de 50 Hz).

Les valeurs minimales et maximales de la durée de court-circuit sont fixées. La valeur minimale est naturellement nulle. La valeur maximale est liée à la période de découpage des transistors du premier ensemble (T1,T2,T3,T4). Typiquement, on limite la durée du court-circuit à 50% de la période de découpage.

Le moyen de détermination 12 du signal de modulation reçoit en entrée le signal « Duree_CC_sec » le signal « Decoup » et le signal « Active_CC_sec » et émet en sortie un premier signal de modulation à destination des transistors T5 et T7 et un deuxième signal de modulation des transistors T6 et T8.

Les quatre transistors du deuxième ensemble de transistors (T5,T6,T7,T8) sont commandés pour réaliser le court-circuit de l'enroulement secondaire du transformateur 6. Toutefois, seule une paire de transistor pourrait être employée avec un résultat identique. La commande des quatre transistors permet de répartir la charge, l'échauffement et l'usure sur tous les transistors disponibles. Dans le cas où les quatre transistors du deuxième ensemble de transistors (T5,T6,T7,T8) sont commandés, le premier signal de modulation et le deuxième signal de modulation présentent un déphasage de 180°.

Lorsque le signal « Active_CC_sec » prend la première valeur, les signaux de modulation à destination du deuxième ensemble de transistors (T5,T6,T7,T8) sont émis.

Lorsque le signal « Active_CC_sec » prend la deuxième valeur, aucun signal de modulation à destination du deuxième ensemble de transistors (T5,T6,T7,T8) n'est pas émis.

Le signal « Duree_CC_sec » fixe la durée du court-circuit.

L'enroulement secondaire du transistor est alors court-circuité deux fois par période de modulation des transistors du premier ensemble (T1,T2,T3,T4), un court-circuit étant réalisé simultanément avec le début de la période de modulation des transistors du premier ensemble (T1,T2,T3,T4), l'autre étant réalisé simultanément avec la fin de la période de modulation des transistors du premier ensemble (T1,T2,T3,T4).

Le signal « Decoup » est un signal redondant par rapport au signal « Active_CC_sec ». En effet, alors que le signal « Active_CC_sec » déclenche le court-circuit de l'enroulement secondaire du transformateur 6, le signal « Decoup » active ou désactive le moyen de détermination 12 du signal de modulation.

## Revendications

1. Procédé de commande d'un chargeur bidirectionnel d'une batterie (5) de véhicule automobile, le chargeur comprenant un étage redresseur (1) connecté en entrée à un réseau d'alimentation électrique (3) et en sortie à un étage de conversion (2) continu-continu et à une capacité (4), l'étage de conversion continu-continu (2) étant connecté à la batterie (5),

   l'étage de conversion continu-continu (2) comprenant un premier ensemble de transistors (T1,T2,T3,T4) connecté en entrée à l'étage redresseur (1) et en sortie en série à un circuit résonnant et à un transformateur (6), le transformateur (6) étant relié à un deuxième ensemble de transistors (T5,T6,T7,T8), le deuxième ensemble (T5,T6,T7,T8) étant relié par ailleurs à la batterie (5), **caractérisé par le fait qu'**il comprend les étapes suivantes :

   on commande l'étage redresseur (1) de sorte que la tension redressée soit égale à la somme de la valeur de crête de la tension du réseau d'alimentation électrique et d'une valeur de décalage constante,
   on commande le premier ensemble de transistors (T1,T2,T3,T4) de l'étage de conversion continu-continu à la fréquence de résonance du circuit résonnant,
   on détermine si le rapport de couplage entre la tension de batterie et la tension redressée est supérieur à une valeur mémorisée du rapport de couplage entre la valeur maximale de la tension de batterie et la valeur minimale de la tension redressée,
   si tel est le cas, on commande le deuxième ensemble de transistors (T5,T6,T7,T8) de l'étage de conversion continu-continu de sorte qu'il soit dans un état passant,
   si tel n'est pas le cas, on commande la commutation de tout ou partie du deuxième ensemble de transistors (T5,T6,T7,T8) de l'étage de conversion continu-continu de sorte qu'un court-circuit de l'enroulement secondaire du transformateur soit réalisé périodiquement, la période de commande du deuxième ensemble de transistors (T5,T6,T7,T8) dépendant du rapport de couplage entre la tension de batterie et la tension redressée.

2. Procédé de commande selon la revendication précédente, dans lequel, pour commander la commutation de tout ou partie du deuxième ensemble de transistors (T5,T6,T7,T8) de l'étage de conversion continu-continu, on réalise les étapes suivantes :

   on détermine au moins un signal d'activation du court-circuit en fonction d'une mesure de la tension redressée,
   on régule la tension redressée en fonction d'une mesure de la tension redressée et d'un signal d'activation en déterminant une durée de court-circuit de l'enroulement secondaire du transformateur, et
   on détermine au moins un signal de commande de deux transistors du deuxième ensemble (T5,T6,T7,T8) en fonction de la durée de court-circuit et d'au moins un signal d'activation.

3. Procédé de commande selon la revendication 2, dans lequel on émet un signal d'activation du court-circuit de l'enroulement secondaire du transformateur (6) qui prend une première valeur lorsque la tension redressée est supérieure à une tension de seuil de court-circuit, et une deuxième valeur sinon.

4. Procédé de commande selon l'une quelconque des revendications 2 ou 3, dans lequel on détermine une durée de court-circuit de l'enroulement secondaire du transformateur (6) en fonction de l'écart entre la mesure de tension redressée et la valeur d'une consigne correspondante par une correction de type proportionnel, intégral, dérivée.

**EP 3 077 248 B1**

**5.** Procédé de commande selon l'une quelconque des revendications 2 à 4, dans lequel on émet au moins un signal de modulation lorsque le signal d'activation prend une première valeur, aucun signal n'étant émis si le signal d'activation prend une deuxième valeur, les signaux de modulation étant aptes à commuter tout ou partie des transistors du deuxième ensemble de sorte que l'enroulement secondaire du transformateur soit court-circuité pendant une durée égale à la durée de court-circuit.

**6.** Procédé de commande selon l'une quelconque des revendications 2 à 5, dans lequel on émet un premier signal de modulation à destination de la paire formée par un cinquième transistor (T5) et un septième transistor (T7) et/ou un deuxième signal de modulation à destination de la paire formée par un sixième transistor (T6) et un huitième transistor (T8).

**7.** Système de commande d'un chargeur bidirectionnel d'une batterie (5) de véhicule automobile, le chargeur comprenant un étage redresseur (1) connecté en entrée à un réseau d'alimentation électrique (3) et en sortie à un étage de conversion (2) continu-continu et à une capacité (4), l'étage de conversion continu-continu (2) étant connecté à la batterie (5),
l'étage de conversion continu-continu (2) comprenant un premier ensemble de transistors (T1,T2,T3,T4) connecté en entrée à l'étage redresseur (1) et en sortie en série à un circuit résonnant et à un transformateur (6), le transformateur (6) étant relié à un deuxième ensemble de transistors (T5,T6,T7,T8), le deuxième ensemble (T5,T6,T7,T8) étant relié par ailleurs à la batterie (5), **caractérisé par le fait qu'**il comprend :

un moyen de commande de l'étage redresseur apte à commander l'étage redresseur (1) de sorte que la tension redressée soit égale à la somme de la valeur de crête de la tension du réseau d'alimentation électrique et d'une valeur de décalage constante,
un moyen de commande des transistors apte à commander la commutation du premier ensemble de transistors (T1,T2,T3,T4) de l'étage de conversion continu-continu à la fréquence de résonance du circuit résonnant,
un moyen de détermination apte à déterminer si le rapport de couplage entre la tension de batterie et la tension redressée est supérieur à une valeur mémorisée du rapport de couplage entre la valeur maximale de la tension de batterie et la valeur minimale de la tension redressée,
si tel est le cas, le moyen de commande des transistors est apte à commander le deuxième ensemble de transistors (T5,T6,T7,T8) de l'étage de conversion continu-continu de sorte qu'il soit dans un état passant,
si tel n'est pas le cas, le moyen de commande des transistors est apte à commander la commutation de tout ou partie du deuxième ensemble de transistors (T5,T6,T7,T8) de l'étage de conversion continu-continu de sorte qu'un court-circuit de l'enroulement secondaire du transformateur soit réalisé périodiquement, la période de commande du deuxième ensemble de transistors (T5,T6,T7,T8) dépendant du rapport de couplage entre la tension de batterie et la tension redressée.

**8.** Système de commande selon la revendication 7, dans lequel le moyen de commande des transistors comprend un moyen de commande (10) d'activation recevant en entrée une mesure de la tension redressée, un moyen de régulation (11) de la tension redressée recevant en entrée une mesure de la tension redressée et un signal d'activation du moyen de commande (10) d'activation, et un moyen de détermination (12) du signal de modulation, recevant en entrée une durée de court-circuit du moyen de régulation (11) de la tension redressée et le signal d'activation du court-circuit provenant du moyen de commande (10) d'activation, le moyen de détermination (12) du signal de modulation étant apte à émettre en sortie au moins un signal de commande de deux transistors du deuxième ensemble (T5,T6,T7,T8).

**9.** Système de commande selon la revendication 8, dans lequel le moyen de commande (10) d'activation émet un signal d'activation du court-circuit de l'enroulement secondaire du transformateur (6) qui prend une première valeur lorsque la tension redressée est supérieure à une tension de seuil de court-circuit, et une deuxième valeur sinon.

**10.** Système de commande selon l'une quelconque des revendications 8 ou 9, dans lequel le moyen de régulation (11) de la tension redressée comprend une correction de type proportionnel, intégral, dérivée apte à déterminer une durée de court-circuit de l'enroulement secondaire du transformateur (6) en fonction de l'écart entre la mesure de tension redressée et la valeur d'une consigne correspondante.

**11.** Système de commande selon l'une quelconque des revendications 8 à 10, dans lequel au moins un signal de modulation est émis par le moyen de détermination (12) du signal de modulation lorsque le signal d'activation prend une première valeur, aucun signal n'étant émis si le signal d'activation prend une deuxième valeur,
les signaux de modulation étant aptes à commuter tout ou partie des transistors du deuxième ensemble de sorte que l'enroulement secondaire du transformateur soit court-circuité pendant une durée égale à la durée de court-circuit déterminée par le moyen de régulation (11) de la tension redressée.

12. Système de commande selon l'une quelconque des revendications 8 à 11, dans lequel le moyen de détermination (12) du signal de modulation est apte à émettre un premier signal de modulation à destination de la paire formée par le cinquième transistor (T5) et le septième transistor (T7) et/ou un deuxième signal de modulation à destination de la paire formée par le sixième transistor (T6) et le huitième transistor (T8).

**Patentansprüche**

1. Verfahren zum Steuern eines bidirektionalen Ladegeräts einer Kraftfahrzeug-Batterie (5), wobei das Ladegerät eine Gleichrichterstufe (1) enthält, die am Eingang an ein Stromversorgungsnetz (3) und am Ausgang an eine Gleichstrom/Gleichstrom-Wandlerstufe (2) und an einen Kondensator (4) angeschlossen ist, wobei die Gleichstrom/Gleichstrom-Wandlerstufe (2) an die Batterie (5) angeschlossen ist,
wobei die Gleichstrom/Gleichstrom-Wandlerstufe (2) eine erste Einheit von Transistoren (T1, T2, T3, T4) enthält, die am Eingang an die Gleichrichterstufe (1) und am Ausgang in Reihe an einen Resonanzkreis und an einen Transformator (6) angeschlossen ist, wobei der Transformator (6) mit einer zweiten Einheit von Transistoren (T5, T6, T7, T8) verbunden ist, wobei die zweite Einheit (T5, T6, T7, T8) außerdem mit der Batterie (5) verbunden ist,
**dadurch gekennzeichnet, dass** es die folgenden Schritte enthält:

die Gleichrichterstufe (1) wird so gesteuert, dass die gleichgerichtete Spannung gleich der Summe des Spitzenwerts der Spannung des Stromversorgungsnetzes und eines konstanten Offsetwerts ist,
die erste Einheit von Transistoren (T1, T2, T3, T4) der Gleichstrom/Gleichstrom-Wandlerstufe wird mit der Resonanzfrequenz des Resonanzkreises gesteuert,
es wird ermittelt, ob das Kopplungsverhältnis zwischen der Batteriespannung und der gleichgerichteten Spannung höher ist als ein gespeicherter Wert des Kopplungsverhältnisses zwischen dem maximalen Wert der Batteriespannung und dem minimalen Wert der gleichgerichteten Spannung,
wenn dies der Fall ist, wird die zweite Einheit von Transistoren (T5, T6, T7, T8) der Gleichstrom/Gleichstrom-Wandlerstufe so gesteuert, dass sie in einem Durchlasszustand ist,
wenn dies nicht der Fall ist, wird die Umschaltung aller oder eines Teils der zweiten Einheit von Transistoren (T5, T6, T7, T8) der Gleichstrom/Gleichstrom-Wandlerstufe so gesteuert, dass ein Kurzschluss der Sekundärwicklung des Transformators periodisch erzeugt wird, wobei die Steuerperiode der zweiten Einheit von Transistoren (T5, T6, T7, T8) vom Kopplungsverhältnis zwischen der Batteriespannung und der gleichgerichteten Spannung abhängt.

2. Steuerverfahren nach dem vorhergehenden Anspruch, wobei, um die Umschaltung aller oder eines Teils der zweiten Einheit von Transistoren (T5, T6, T7, T8) der Gleichstrom/Gleichstrom-Wandlerstufe zu steuern, die folgenden Schritte durchgeführt werden:

mindestens ein Aktivierungssignal des Kurzschlusses wird abhängig von einer Messung der gleichgerichteten Spannung ermittelt,
die gleichgerichtete Spannung wird abhängig von einem Messwert der gleichgerichteten Spannung und von einem Aktivierungssignal geregelt, indem eine Kurzschlussdauer der Sekundärwicklung des Transformators ermittelt wird, und
mindestens ein Steuersignal von zwei Transistoren der zweiten Einheit (T5, T6, T7, T8) wird abhängig von der Kurzschlussdauer und mindestens einem Aktivierungssignal ermittelt.

3. Steuerverfahren nach Anspruch 2, wobei ein Aktivierungssignal des Kurzschlusses der Sekundärwicklung des Transformators (6) gesendet wird, das einen ersten Wert annimmt, wenn die gleichgerichtete Spannung höher ist als eine Kurzschluss-Schwellenspannung, und sonst einen zweiten Wert.

4. Steuerverfahren nach einem der Ansprüche 2 oder 3, wobei eine Kurzschlussdauer der Sekundärwicklung des Transformators (6) abhängig von der Abweichung zwischen dem Messwert der gleichgerichteten Spannung und dem Wert eines entsprechenden Sollwerts durch eine Korrektur von der Art Proportional, Integral, Ableitung, bestimmt wird.

5. Steuerverfahren nach einem der Ansprüche 2 bis 4, wobei mindestens ein Modulationssignal gesendet wird, wenn das Aktivierungssignal einen ersten Wert annimmt, wobei kein Signal gesendet wird, wenn das Aktivierungssignal einen zweiten Wert annimmt, wobei die Modulationssignale fähig sind, alle oder einen Teil der Transistoren der zweiten Einheit umzuschalten, so dass die Sekundärwicklung des Transformators während einer Dauer gleich der Kurzschlussdauer kurzgeschlossen wird.

6. Steuerverfahren nach einem der Ansprüche 2 bis 5, wobei ein erstes Modulationssignal an das von einem fünften Transistor (T5) und einem siebten Transistor (T7) gebildete Paar gesendet wird, und/oder ein zweites Modulationssignal an das von einem sechsten Transistor (T6) und einem achten Transistor (T8) gebildete Paar gesendet wird.

7. Steuersystem eines bidirektionalen Ladegeräts einer Kraftfahrzeug-Batterie (5), wobei das Ladegerät eine Gleichrichterstufe (1) enthält, die am Eingang an ein Stromversorgungsnetz (3) und am Ausgang an eine Gleichstrom/Gleichstrom-Wandlerstufe (2) und an einen Kondensator (4) angeschlossen ist, wobei die Gleichstrom/Gleichstrom-Wandlerstufe (2) an die Batterie (5) angeschlossen ist,
wobei die Gleichstrom/Gleichstrom-Wandlerstufe (2) eine erste Einheit von Transistoren (T1, T2, T3, T4) enthält, die am Eingang an die Gleichrichterstufe (1) und am Ausgang in Reihe an einen Resonanzkreis und an einen Transformator (6) angeschlossen ist, wobei der Transformator (6) mit einer zweiten Einheit von Transistoren (T5, T6, T7, T8) verbunden ist, wobei die zweite Einheit (T5, T6, T7, T8) außerdem mit der Batterie (5) verbunden ist, **dadurch gekennzeichnet, dass** es enthält:

eine Steuereinrichtung der Gleichrichterstufe, die fähig ist, die Gleichrichterstufe (1) so zu steuern, dass die gleichgerichtete Spannung gleich der Summe des Spitzenwerts der Spannung des Stromversorgungsnetzes und eines konstanten Offset-Werts ist,
eine Steuereinrichtung der Transistoren, die fähig ist, die Umschaltung der ersten Einheit von Transistoren (T1, T2, T3, T4) der Gleichstrom/Gleichstrom-Wandlerstufe auf der Resonanzfrequenz des Resonanzkreises zu steuern,
eine Ermittlungseinrichtung, die fähig ist, zu ermitteln, ob das Kopplungsverhältnis zwischen der Batteriespannung und der gleichgerichteten Spannung höher ist als ein gespeicherter Wert des Kopplungsverhältnisses zwischen dem maximalen Wert der Batteriespannung und dem minimalen Wert der gleichgerichteten Spannung, wenn dies der Fall ist, ist die Steuereinrichtung der Transistoren fähig, die zweite Einheit von Transistoren (T5, T6, T7, T8) der Gleichstrom/Gleichstrom-Wandlerstufe so zu steuern, dass sie in einem Durchlasszustand ist, wenn dies nicht der Fall ist, ist die Steuereinrichtung der Transistoren fähig, die Umschaltung aller oder eines Teils der zweiten Einheit von Transistoren (T5, T6, T7, T8) der Gleichstrom/Gleichstrom-Wandlerstufe so zu steuern, dass ein Kurzschluss der Sekundärwicklung des Transformators periodisch erzeugt wird, wobei die Steuerperiode der zweiten Einheit von Transistoren (T5, T6, T7, T8) vom Kopplungsverhältnis zwischen der Batteriespannung und der gleichgerichteten Spannung abhängt.

8. Steuersystem nach Anspruch 7, wobei die Steuereinrichtung der Transistoren eine Aktivierungs-Steuereinrichtung (10), die am Eingang einen Messwert der gleichgerichteten Spannung empfängt, eine Regelungseinrichtung (11) der gleichgerichteten Spannung, die am Eingang einen Messwert der gleichgerichteten Spannung und ein Aktivierungssignal der Aktivierungs-Steuereinrichtung (10) empfängt, und eine Ermittlungseinrichtung (12) des Modulationssignals enthält, die am Eingang eine Kurzschlussdauer der Regelungseinrichtung (11) der gleichgerichteten Spannung und das Aktivierungssignal des Kurzschlusses empfängt, das von der Aktivierungs-Steuereinrichtung (10) kommt, wobei die Ermittlungseinrichtung (12) des Modulationssignals fähig ist, am Ausgang mindestens ein Steuersignal von zwei Transistoren der zweiten Einheit (T5, T6, T7, T8) zu senden.

9. Steuersystem nach Anspruch 8, wobei die Aktivierungs-Steuereinrichtung (10) ein Aktivierungssignal des Kurzschlusses der Sekundärwicklung des Transformators (6) sendet, das einen ersten Wert annimmt, wenn die gleichgerichtete Spannung höher ist als eine Kurzschluss-Schwellenspannung, und sonst einen zweiten Wert.

10. Steuersystem nach einem der Ansprüche 8 oder 9, wobei die Regelungseinrichtung (11) der gleichgerichteten Spannung eine Korrektur der Art Proportional, Integral, Ableitung enthält, die fähig ist, eine Kurzschlussdauer der Sekundärwicklung des Transformators (6) abhängig von der Abweichung zwischen dem Messwert der gleichgerichteten Spannung und dem Wert eines entsprechenden Sollwerts zu ermitteln.

11. Steuersystem nach einem der Ansprüche 8 bis 10, wobei mindestens ein Modulationssignal von der Ermittlungseinrichtung (12) des Modulationssignals gesendet wird, wenn das Aktivierungssignal einen ersten Wert annimmt, wobei kein Signal gesendet wird, wenn das Aktivierungssignal einen zweiten Wert annimmt,
wobei die Modulationssignale fähig sind, alle oder einen Teil der Transistoren der zweiten Einheit so umzuschalten, dass die Sekundärwicklung des Transformators während einer Dauer gleich der von der Regelungseinrichtung (11) der gleichgerichteten Spannung ermittelten Kurzschlussdauer kurzgeschlossen wird.

12. Steuersystem nach einem der Ansprüche 8 bis 11, wobei die Ermittlungseinrichtung (12) des Modulationssignals fähig ist, ein erstes Modulationssignal an das vom fünften Transistor (T5) und vom siebten Transistor (T7) geformte Paar und/oder ein zweites Modulationssignal an das vom sechsten Transistor (T6) und vom achten Transistor (T8) gebildete Paar zu senden.

**Claims**

1. Method of control of a bidirectional charger of an automotive vehicle battery (5), the charger comprising a rectifier stage (1) connected at input to an electrical power supply network (3) and at output to a DC/DC conversion stage (2) and to a capacitor (4), the DC/DC conversion stage (2) being connected to the battery (5),

   the DC/DC conversion stage (2) comprising a first set of transistors (T1,T2,T3,T4) connected at input to the rectifier stage (1) and at output in series to a resonant circuit and to a transformer (6), the transformer (6) being linked to a second set of transistors (T5,T6,T7,T8), the second set (T5,T6,T7,T8) being linked moreover to the battery (5), **characterized by** the fact that it comprises the following steps:

   the rectifier stage (1) is controlled so that the rectified voltage is equal to the sum of the peak value of the voltage of the electrical power supply network and of a constant offset value,
   the first set of transistors (T1,T2,T3,T4) of the DC/DC conversion stage is controlled at the resonance frequency of the resonant circuit,
   it is determined whether the coupling ratio between the battery voltage and the rectified voltage is greater than a stored value of the coupling ratio between the maximum value of the battery voltage and the minimum value of the rectified voltage,
   if such is the case, the second set of transistors (T5,T6,T7,T8) of the DC/DC conversion stage is controlled so that it is in a passing state,
   if such is not the case, the switching of all or some of the second set of transistors (T5,T6,T7,T8) of the DC/DC conversion stage is controlled so that a short-circuit of the secondary winding of the transformer is achieved periodically, the control period of the second set of transistors (T5,T6,T7,T8) being dependent on the coupling ratio between the battery voltage and the rectified voltage.

2. Control method according to the preceding claim, in which, to control the switching of all or some of the second set of transistors (T5,T6,T7,T8) of the DC/DC conversion stage, the following steps are carried out:

   at least one signal for activating the short-circuit is determined as a function of a measurement of the rectified voltage,
   the rectified voltage is regulated as a function of a measurement of the rectified voltage and of an activation signal by determining a duration of short-circuit of the secondary winding of the transformer, and
   at least one control signal for two transistors of the second set (T5,T6,T7,T8) is determined as a function of the duration of short-circuit and of at least one activation signal.

3. Control method according to Claim 2, in which a signal for activating the short-circuit of the secondary winding of the transformer (6) is emitted which takes a first value when the rectified voltage is greater than a short-circuit threshold voltage, and a second value otherwise.

4. Control method according to either one of Claims 2 or 3, in which a duration of short-circuit of the secondary winding of the transformer (6) is determined as a function of the disparity between the rectified voltage measurement and the value of a corresponding setpoint by a derived correction of proportional, integral type.

5. Control method according to any one of Claims 2 to 4, in which at least one modulation signal is emitted when the activation signal takes a first value, no signal being emitted if the activation signal takes a second value, the modulation signals being able to switch all or some of the transistors of the second set so that the secondary winding of the transformer is short-circuited for a duration equal to the duration of short-circuit.

6. Control method according to any one of Claims 2 to 5, in which a first modulation signal is emitted destined for the pair made up of a fifth transistor (T5) and a seventh transistor (T7) and/or a second modulation signal is emitted destined for the pair made up of a sixth transistor (T6) and an eighth transistor (T8).

7. System for control of a bidirectional charger of an automotive vehicle battery (5), the charger comprising a rectifier stage (1) connected at input to an electrical power supply network (3) and at output to a DC/DC conversion stage (2) and to a capacitor (4), the DC/DC conversion stage (2) being connected to the battery (5), the DC/DC conversion stage (2) comprising a first set of transistors (T1,T2,T3,T4) connected at input to the rectifier stage (1) and at output in series to a resonant circuit and to a transformer (6), the transformer (6) being linked to a second set of transistors (T5,T6,T7,T8), the second set (T5,T6,T7,T8) being linked moreover to the battery (5), **characterized by** the fact that it comprises:

   a means of control of the rectifier stage able to control the rectifier stage (1) so that the rectified voltage is equal to the sum of the peak value of the voltage of the electrical power supply network and of a constant offset value, a means of control of the transistors able to control the switching of the first set of transistors (T1,T2,T3,T4) of the DC/DC conversion stage at the resonance frequency of the resonant circuit, a determination means able to determine whether the coupling ratio between the battery voltage and the rectified voltage is greater than a stored value of the coupling ratio between the maximum value of the battery voltage and the minimum value of the rectified voltage, if such is the case, the means of control of the transistors is able to control the second set of transistors (T5,T6,T7,T8) of the DC/DC conversion stage so that it is in a passing state, if such is not the case, the means of control of the transistors is able to control the switching of all or some of the second set of transistors (T5, T6, T7, T8) of the DC/DC conversion stage so that a short-circuit of the secondary winding of the transformer is achieved periodically, the control period of the second set of transistors (T5,T6,T7,T8) being dependent on the coupling ratio between the battery voltage and the rectified voltage.

8. Control system according to Claim 7, in which the means of control of the transistors comprises an activation control means (10) receiving as input a measurement of the rectified voltage, a means (11) for regulating the rectified voltage receiving as input a measurement of the rectified voltage and a signal for activation of the activation control means (10), and a means (12) for determining the modulation signal, receiving as input a duration of short-circuit of the means (11) for regulating the rectified voltage and the signal for activating the short-circuit originating from the activation control means (10), the means (12) for determining the modulation signal being able to emit as output at least one control signal for two transistors of the second set (T5,T6,T7,T8).

9. Control system according to Claim 8, in which the activation control means (10) emits a signal for activating the short-circuit of the secondary winding of the transformer (6) which takes a first value when the rectified voltage is greater than a short-circuit threshold voltage, and a second value otherwise.

10. Control system according to either one of Claims 8 or 9, in which the means (11) for regulating the rectified voltage comprises a derived correction of proportional, integral type able to determine a duration of short-circuit of the secondary winding of the transformer (6) as a function of the disparity between the rectified voltage measurement and the value of a corresponding setpoint.

11. Control system according to any one of Claims 8 to 10, in which at least one modulation signal is emitted by the means (12) for determining the modulation signal when the activation signal takes a first value, no signal being emitted if the activation signal takes a second value, the modulation signals being able to switch all or some of the transistors of the second set so that the secondary winding of the transformer is short-circuited for a duration equal to the duration of short-circuit determined by the means (11) for regulating the rectified voltage.

12. Control system according to any one of Claims 8 to 11, in which the means (12) for determining the modulation signal is able to emit a first modulation signal destined for the pair made up of the fifth transistor (T5) and the seventh transistor (T7) and/or a second modulation signal destined for the pair made up of the sixth transistor (T6) and the eighth transistor (T8).

# FIG.1

# FIG.2

# FIG.3

# FIG.4

# FIG.5

Activation 10

Active_CC_sec

Régulation Vred 11

Vred

Decoup

Active_CC_sec

Durée_CC_sec

Détermination du signal de modulation 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013314950 A
- US 20110273130 A

- FR 1255070